# EUROPEAN PATENT SPECIFICATION

(11) **EP 2 699 409 B1**
(45) Date of publication and mention of the grant of the patent: **04.12.2019**
(21) Application number: 12719564.2
(22) Date of filing: 16.04.2012
(51) Int. Cl.: B29C 70/52, B65H 57/16

(54) **PULTRUSION APPARATUS WITH FIBER GUIDES**
STRANGZIEHVORRICHTUNG MIT FASERFÜHRUNGEN
APPAREIL DE PULTRUSION AVEC GUIDES POUR FIBRES

(30) Priority: 15.04.2011 DK 201100302; 15.04.2011 DK 201100303
(43) Date of publication of application: 26.02.2014
(73) Proprietor: VKR Holding A/S, 2970 Hørsholm (DK)
(72) Inventor: NØRGAARD, Henry, DK-6950 Ringkøbing (DK)
(74) Representative: Patentgruppen A/S
(86) International application number: PCT/DK2012/000046
(87) International publication number: WO 2012/139581

(56) References cited:
- DE-A1- 19 754 381
- US-A- 3 993 726
- US-A- 4 168 194
- US-A- 5 804 012
- US-A1- 2003 029 547

## Description

### FIELD OF THE INVENTION

The invention relates to a pultrusion apparatus and, more particularly, to a pultrusion apparatus to manufacture products/profiles with more evenly distributed fibre bundles.

### BACKGROUND OF THE INVENTION

The composite moulding industry constantly improves its processes to develop products that are light weight, durable and have improved physical characteristics. Further, a number of companies constantly invest in research and development to facilitate both economical and efficient manufacturing of such products.

Among the various composite moulding techniques, pultrusion is one of the most common techniques for manufacturing composites. It is well known in the art that the pultrusion process facilitates continuous production of composites, thereby helping the manufacturers attain high efficiency and productivity. In a typical pultrusion process, fibre bundles are collimated through guidance through pre-form plates with a through-hole for each fibre bundle and afterwards drawn through a resin reservoir. The resin-impregnated fibre materials are then introduced into a pultrusion die and are subsequently cured due to a high temperature of the pultrusion die. Finally, the cured fibres are pulled from the other side of the pultrusion die to produce the continuously pultruded products.

The pultruded product, which may also be referred to as a 'profile', corresponds to a geometric shape of the corresponding pultrusion die. The profile may have a plurality of sections that may have varying or similar cross-sections.

As described above, the resin/fibre material is introduced into the pultrusion die, which is heated to cure the resin.

From the point where the fibres leave the last pre-form plate and until the fibres are fully cured, the fibre bundles are abutting each other as guided by the circumference of the desired profile. As such, the movement of the individual fibres and fibre bundles is restricted by the geometry of the various pre-form plates, the resin reservoir and the walls of the pultrusion die combined with the pulling force that pulls the fibres in the production direction.

Ideally the fibre bundles are perfectly aligned within the profile to achieve good mechanical properties and a good surface finish of the pultruded product.

Unfortunately, due to irregularities of the pultrusion process, the described perfect alignment may be disturbed and a build up of fibre density may happen in certain sections of the pultruded product, while other sections of the profile may at the same time lack fibre density, whereby the mechanical strength of the pultruded product may be poorer than specified resulting in costly scrapping of parts and even down time of the pultrusion line.

Moreover, if a good surface finish of the pultruded product is desirable, fibres extending from the pultruded part due to misalignment and drifting of the fibres within the profile due to the aforementioned irregularities may have to be removed from the final product by costly finishing processes or may even lead to rejections.

US 2003/0029547 A1 discloses a pultrusion apparatus with guiding means for positioning reinforcement strands prior to entering a forming die.

US 3 993 726 discloses a pultrusion apparatus for manufacturing thermoplastic reinforced products using an injection box to impregnate the fibers.

It is an object of the present invention to provide a method and an apparatus to facilitate an improved even distribution of the individual fibre bundles in the cured profile.

### SUMMARY OF THE INVENTION

The present invention relates to a pultrusion apparatus for manufacturing a pultruded product according to claim 1.

It has surprisingly been found by the present inventors that the introduction of one or more fibre guides in the production path may diminish the problems mentioned above so that less scrap and less down time is achieved and thereby significant economic advantages are obtained when compared to the same production line without any fibre guides. With a controlled positioning of fibre guides in the pultrusion apparatus, the risk of the pultruded products turning e.g. buckled, warped, or lopsided may be significantly diminished. Moreover it may be possible to control the fibres sufficiently to establish small features in the pultruded products which would be too risky in prior art without fibre guides to ensure a certain distribution of fibres in that small feature.

According to the present invention the fibre guides must be placed after the fibres have been contacted with resin but before the resin is fully cured.

Placement of the fibre guides in the pultrusion apparatus is dependent on the geometry of the profile being produced. Sections of the profile where unwanted rearrangement and drifting of the fibre material is probable, e.g. where a comparatively thin profile section meets a comparatively thick profile section, a fibre guide may advantageously be placed to help keeping the fibre bundles on a more or less straight path. Hereby a more uniform fibre density throughout the full profile may be obtained.

It is noted that the use of fibre guides is highly desirable for complex structures of pultruded products. For such complex structures, it may be more problematic with slightly dislocated fibres as compared to more simple structures. In particular this is the case for complex structures comprising rather thin sections, where it may be highly important to ensure a relatively uniform distribution of the fibres.

A further advantage of the use of fibre guides is that, if desired, one or more fibre bundles may be controlled individually in the pultruded product. In this way, different types of fibres, e.g. carbon fibres to further strengthen the pultruded product, may be used with high accuracy.

In an embodiment of the invention, said at least one fibre guide (33, 34, 35) facilitates an even distribution of said fibre bundles (8) in said pultruded product (19).

According to an embodiment, said at least one fibre guide prevents a part of said fibre bundles from changing direction. According to another embodiment, said at least one fibre guide helps to keep the fibre bundles oriented in the production direction. According to a further embodiment, said at least one fibre guide prevents fibre bundles from protruding from a pultruded product. According to an embodiment, said at least one fibre guide enhances the surface quality of the pultruded product by preventing the migration of fibre bundles towards the surface of the pultruded product.

According to an embodiment, the position of said at least one fibre guide may be individually adjusted. Such individual adjustment, e.g. with fibre guides in the form of adjustable walls, may be useful e.g. if after mounting it is seen that the fibres may preferably be adjusted slightly to one of the sides.

In an embodiment of the invention, said at least one fibre guide (33, 34, 35) extends fully across said fibre bundles (8), thereby separating said fibre bundles (8) into at least two separate groups during passage of said at least one fibre guide (33, 34, 35). With a fibre guide extending fully across said fibre bundles is e.g. obtained that the fibre guide can be fastened at both ends. Obviously this will result in a stronger construction, and a thinner fibre guide may be applicable when compared to a partly extending fibre guide.

In an embodiment of the invention, said at least one fibre guide (33, 34, 35), in a cross-section perpendicular to said production direction, has a thickness between 0.2 and 10 mm, such as 0.2 and 5 mm, preferably between 0.5 and 4 mm.

According to another embodiment, a cross-section of said at least one fibre guide perpendicular to said production direction has a thickness between 0.3 and 4 mm, such as between 1 and 4 mm or between 2 and 4 mm.

The thickness of the fibre guides is an important parameter. A too thin fibre guide may cause that the fibre guide is not sufficiently strong to withstand the forces from fibre bundles being pulled close beside the fibre guide. Thereby a too thin fibre guide may actually end up destroying a profile.

On the other hand a too thick fibre guide may cause too much separation to the fibre bundles, thereby making the gathering of the fibre bundles behind the fibre guide less ideal.

According to the invention, a cross-section of said at least one fibre guide (33, 34, 35) perpendicular to said production direction has an area of less than 2 cm², preferably less than 1 cm².

In an embodiment, said at least one fibre guide (33, 34, 35) extends at least 5 mm, preferably at least 10 mm such as at least 20 mm in between said fibre bundles (8).

In further embodiments, said at least one fibre guide extends at least 3 mm, at least 4 mm, at least 6 mm, or at least 8 mm such as at least 15 mm in between said fibre bundles.

In order to guide a larger number of fibre bundles, a larger extension in between the fibre bundles may be desired.

Most typically the fibre guides will extend perpendicular to the production direction. Such design is believed to be the most simple to manufacture. When in the present context it is stated that a fibre guide extends e.g. at least 2 mm in between said fibre bundles, the meaning will be clear for a fibre guide extending perpendicular to production direction as explained above. For a fibre guide which is not perpendicular to production direction, the extension in between the fibres corresponds to the projection of the fibre guide into a cross-section perpendicular to the production direction.

In an embodiment, said at least one fibre guide (33, 34, 35) extends between 5 and 30 mm, preferably between 10 and 20 mm, along said production direction.

The extension along the production direction of the fibre guides is an important parameter. A too short extension may cause that the fibre guide is not sufficiently strong to withstand the forces from fibre bundles being pulled close beside the fibre guide. Thereby a too short fibre guide may actually end up destroying a profile.

On the other hand a too long fibre guide may cause too much separation to the fibre bundles, thereby making the gathering of the fibre bundles behind the fibre guide less ideal.

In an embodiment, said at least one fibre guide (33, 34, 35) is arranged perpendicular to the production direction.

In an embodiment of the invention, said at least one fibre guide (33, 34, 35) is an integrated part of a separate guide plate (10) arranged between said injection box (4) and said pultrusion die (5).

According to an embodiment, said pultrusion apparatus further comprises a guide plate arranged at a distance of between 0 and 50 cm from the inlet of said pultrusion die,

In an embodiment, said pultrusion apparatus comprises at least two fibre guides (33, 34, 35), such as at least three or at least four fibre guides, preferably said fibre guides are part of said guide plate (10).

In an embodiment, more than 90 % of the fibres of said pultruded product extend along the production direction, such as all of the fibres of said pultruded product.

According to an embodiment, the pultrusion apparatus may typically be operated at a substantially constant speed.

Polyurethane (PUR) is believed to provide more strength than e.g. polyester resin. Therefore, a pultruded product of a larger amount of uni-directional fibres in combination with PUR may possess satisfactorily strength.

According to an embodiment, the amount of fibres in the pultruded product is between 50 and 90 % by weight of the pultruded product, preferably between 60 and 85. The remaining part is then resin. For PUR as the resin, it is typically between 70 and 85, and for polyester as the resin, it is typically between 60 and 75.

In an embodiment, said pultruded product has a cross-section, which is not a rectangular shape.

According to an embodiment, the fibre guides are in particular advantageous for complex structures of the pultruded products.

A complex structure may e.g. be defined as a structure comprising at least one section with a thickness of less than 4 mm, or even less than 2 mm. Further, a complex structure may be defined as a structure with a cross-section with at least one, such as at least two, cavities. Such cavities are made typically made by mandrels extending into the interior of the pultrusion die.

In an embodiment, said at least one fibre guide (33, 34, 35) extends fully across said fibre bundles (8) in a substantially horizontal or substantially vertical direction.

In an embodiment, a first fibre guide (33, 34, 35) extends fully across said fibre bundles (8) in a substantially horizontal direction and a second fibre guide (33, 34, 35) extends fully across said fibre bundles (8) in a substantially vertical direction, thereby separating said fibre bundles (8) into separate groups during passage of said at least one fibre guide (33, 34, 35).

In an embodiment of the invention, said pultrusion apparatus comprises at least two mandrels (51, 52) with lengths L1 and L2 fixed to a support means (53), e.g. a support bracket, at a point outside the inlet end of said pultrusion die (5), said at least two mandrels (51, 52) extend into the interior of said pultrusion die (5) in said production direction.

In an embodiment of the invention, said at least one fibre guide (33, 34, 35) is configured to restrict the movement of at least one of said at least two mandrels (51, 52).

According to advantageous embodiments of the invention, the fibre guides may be used to restrict the movement of one or more of the mandrels, when mandrels are used. Hereby the fibre guides serve a double purpose, namely guiding the fibres and helping in fixing the mandrels. Hereby the movement of the at least two mandrels may be restricted significantly as compared to prior art. In this connection it is worth remembering that the mandrels do not only tend to move due to force exerted from the passing fibres; the mandrels may as well deform slightly over time due to the variations in temperatures in a heated pultrusion die when the apparatus is online to a cold pultrusion die when the apparatus is offline. Therefore, fibre guides may be helpful in this regard.

In an embodiment of the invention, at least two, such as at least three, fibre guides (33, 34, 35) are configured to restrict the movement of at least one of said at least two mandrels (51, 52).

In an embodiment, said at least one fibre guide (33, 34, 35) is part of at least one element selected from the group consisting of a guide plate (10), a mandrel (51, 52), said resin reservoir (4, 20) and said pultrusion die (5).

According to further embodiments, the one or more fibre guides may be placed on desired positions between the support means and the position where the curing of the resin has reached a certain level, which will often be in the first fourth of the pultrusion die. When the fibre guides are used to restrict the movement of at least one mandrel by a connection between the mandrel and a wall of a guide plate, resin reservoir or pultrusion die, this may be fixed in either end. Consequently, a mandrel may comprise one or more fibre guides as well.

In an embodiment of the invention, said at least one fibre guide (33, 34, 35) is a connecting element (54) between said at least two mandrels (51, 52).

In an embodiment of the invention, said at least one fibre guide (33, 34, 35) is fastened to each of said at least two mandrels (51, 52) at a position of between 5 and 95% of L1 and L2, respectively, from said support means (53).

In an embodiment of the invention, said support means (53) is positioned at a point outside the inlet end of said injection box.

In an embodiment of the invention, said support means (53) is an integral part of said inlet end of said injection box.

With the support means positioned in or outside of the inlet end of said resin reservoir, it is possible to tightly connect resin reservoir and pultrusion and optionally a guide plate and still use mandrels. This is highly preferred over some prior art, where fibres are wetted in a resin reservoir and then lifted into open air again before entering the die, resulting in a risk of large-scale waste of resin. With tightly connected units as in embodiments of the present invention, a lessened waste of resin may be observed.

In an embodiment of the invention, said pultrusion apparatus comprises heating means for heating said at least two mandrels.

In embodiments of the invention, heating means may be used to heat said mandrels. Hereby it may be made possible to cure the pultruded components not only from the outside due to the heated die, but also at least to some extent inside-out due to the heat from heated mandrels.

According to embodiments of the invention, the connecting element may be used both to connect mandrels and as a fibre guide as described herein.

According to an embodiment of the present invention, it has surprisingly been realized that at least two mandrels may be connected with at least one connecting element without damaging the final product. This is in direct contrast to prior art, where it has been believed that such mandrels must not be supported any other places than outside the inlet end of the resin reservoir/pultrusion die.

By using a connecting element according to an embodiment of the present invention, the relative movement of the at least two mandrels with respect to each other may be restricted significantly as compared to prior art.

Typically the lengths L1 and L2 will be substantially the same. However, for different lengths of L1 and L2, the percentages given for position counts for each individual mandrel. A length of a mandrel may typically be between 40 cm and 400 cm.

Another aspect, which does not form part of the invention relates to a pultrusion apparatus for manufacturing a pultruded product, said pultrusion apparatus comprising a fibre supply (1) for supplying fibre bundles (8) comprising a plurality of fibres, a resin supply (2a, 2b), a resin reservoir (4, 20), a pultrusion die (5), a pulling mechanism (6a, 6b) being arranged for pulling the fibre bundles (8) from the fibre supply (1) and through the resin reservoir (4, 20) and the pultrusion die (5), and where the fibre bundles (8), during operation of said pultrusion apparatus, are being impregnated by the resin in the resin reservoir (4, 20) and thereafter are being pulled through the pultrusion die (5) for curing the resin,
wherein the movement of the fibre bundles (8) through said pultrusion apparatus during operation of said pultrusion apparatus defines a production direction,
said pultrusion apparatus comprises at least two mandrels (51, 52) with lengths L1 and L2 fixed to a support means (53), e.g. a support bracket (53), at a point outside the inlet end of said pultrusion die (5),
said at least two mandrels (51, 52) extend into the interior of said pultrusion die (5) in said production direction,
said at least two mandrels (51, 52) are connected with at least one connecting element (54) adapted for restricting the movement of said at least two mandrels (51, 52) relative to each other, and
said at least one connecting element (54) being fastened to each of said at least two mandrels (51, 52) at a position of between 5 and 95% of L1 and L2, respectively, from said support means (53).

In an embodiment, said at least one connecting element (54) is fastened to each of said at least two mandrels (51, 52) in a position of between 10 and 90%, preferably between 15 and 80% of L1 and L2, respectively, from said support means (53).

Typically the mandrels extend into the interior of the pultrusion die at least until the resin is almost fully cured in order to ensure that the hollow sections are maintained in the finished profile. However, the connecting element should preferably not be positioned at a point where the resin is almost cured, since it would then be more difficult for the fibres to gather again on the backside of the connecting element. Furthermore, a connecting element close to a support bracket is not providing substantial further support. Therefore, the at least one connecting element is preferably positioned at the middle of the mandrels, e.g. in a position of between 20 and 70%, or between 30 and 60% of L1 and L2, respectively, from said support bracket.

In an embodiment, said at least one connecting element (54) is fastened to each of said at least two mandrels (51, 52) at a position along said production direction where, during operation, resin has been added to said fibre bundles (8) but where said resin has not yet been fully cured into said pultruded product (19).

In an embodiment, said at least two mandrels (51, 52) are cantilevered forward through the interior of at least a part of said pultrusion die (5).

In an embodiment, said connecting element (54) is a transversal connecting element.

In an embodiment, said at least two mandrels (51, 52) are connected with at least two, at least three or at least four connecting elements (54).

In an embodiment, said at least one connecting element (54), in a cross-section perpendicular to said production direction, has a thickness between 0.2 and 10 mm, preferably between 2 and 8 mm.

According to an embodiment, a cross-section of said at least one connecting element perpendicular to said production direction has a thickness between 3 and 7 mm, such as between 4 and 6 mm or alternatively between 0.2 and 5 mm.

The thickness of the connecting element is an important parameter. A too thin connecting element may cause that the connecting element is not sufficiently strong to withstand the forces from fibre bundles being pulled close beside the connecting element Thereby a too thin connecting element may actually end up destroying a profile. Furthermore, in order to make a sufficiently strong connection between the at least two mandrels, a thick connecting element may be desired.

On the other hand a too thick connecting element may cause too much separation to the fibre bundles, thereby making the gathering of the fibre bundles behind the connecting element less ideal.

In an embodiment, a cross-section of said at least one connecting element (54) perpendicular to said production direction has an area of less than 2 cm², preferably less than 1 cm².

In an embodiment, a distance between said at least two mandrels (51, 52) is at least 5 mm, such as at least 10 mm or at least 20 mm.

In an embodiment, said at least one connecting element (54) extends between 5 and 30 mm, preferably between 10 and 20 mm, in said production direction.

In an embodiment, said support means (53) is positioned at a point outside the inlet end of said resin reservoir (4, 20).

In an embodiment, said support means (53) is an integral part of said inlet end of said resin reservoir.

With the support means positioned in or outside of the inlet end of said resin reservoir, it is possible to tightly connect resin reservoir and pultrusion and optionally a guide plate and still use mandrels. This is highly preferred over some prior art, where fibres are wetted in a resin reservoir and then lifted into open air again before entering the die, resulting in a risk of large-scale waste of resin. With tightly connected units as in embodiments of the present invention, a lessened waste of resin may be observed.

In an embodiment, said pultrusion apparatus comprises heating means for heating said at least two mandrels.

In further embodiments, heating means may be used to heat said mandrels. Hereby it may be made possible to cure the pultruded components not only from the outside due to the heated die, but also at least to some extent inside-out due to the heat from heated mandrels.

The extension along the production direction of the connecting element is an important parameter.

A too short extension may cause that the connecting element is not sufficiently strong to withstand the forces from fibre bundles being pulled close beside the connecting element. Thereby a too short connecting element may actually end up destroying a profile.

On the other hand a too long connecting element may cause too much separation to the fibre bundles, thereby making the gathering of the fibre bundles behind the connecting element less ideal.

In an embodiment, said pultrusion apparatus further comprises a replaceable inlet section (11) arranged between said resin reservoir (4, 20) and said pultrusion die (5),
said replaceable inlet section (11) comprising an inner fibre-passing section (42) with a tapered shape, wherein, when considering cross-sections of said replaceable inlet section perpendicular to said production direction, the inlet cross-section (43) of said fibre-passing section (42) is larger than the outlet cross-section (44) of said fibre-passing section (42) whereby said fibre-passing section (42) is given a tapered shape tapered towards said pultrusion die (5).

According to further embodiments, it has been discovered that it is primarily the inlet end of the pultrusion die of the prior art which tends to deteriorate. During movement of the fibres through the resin reservoir and further for the first part of the pultrusion die, the shape of the interior of the resin reservoir and the pultrusion die typically in prior art is made to taper towards the shape of the profile. This tapering extends over some distance in the process in order to obtain a smoothly enhanced pressure on the resin/fibre collection prior to heating in the pultrusion die. It has been observed that it is this enhanced pressure that wears the pultrusion die and causes that the pultrusion die is relatively quickly worn.

According to embodiments of the present disclosure, said tapering of the pultrusion die may be avoided. A replaceable inlet section is used in front of the pultrusion die, such that the tapered shape of this is the subject of the resulting enhanced pressure. Thereby a replacement may be required at the same time intervals; however, instead of replacing the full pultrusion die, it is only required to replace the replaceable inlet section, thereby saving time and money.

A further advantage of the use of such replaceable inlet section is that heat transport backwards in the system may be diminished. Such backwards heat transfer is undesired since the curing of resin should preferably not occur at all before the fibres/resin has entered the pultrusion die with the correct profile shape. Since the pultrusion die typically is made from steel, a large number of possible materials for manufacturing the replaceable inlet section would lower the heat transfer as compared to steel.

In an embodiment, said tapered shape results in a pressure rise from said inlet (43) to said outlet (44) of said replaceable inlet section (11).

With a relatively smooth tapered shape, a steady pressure rise may be obtained for the fibre bundles travelling through the replaceable inlet section.

In an embodiment, said replaceable inlet section (11) is adapted to be replaced in said pultrusion apparatus without having to disassemble said pultrusion die (5).

In an embodiment, the inlet cross-section (43) of said fibre-passing section (42) is at least 2% larger, preferably at least 4% larger, such as 6% larger, than the outlet cross-section (44) of said fibre-passing section (42).

According to an embodiment of the invention the circumference of the fibre-passing section at the inlet of said replaceable inlet section is less than 110%, such as between 101 % and 107 %, of the circumference of the pultruded product.

In an embodiment, the circumference of the fibre-passing section at the outlet of said replaceable inlet section is substantially equal to the circumference of said pultruded product.

According to an advantageous embodiment, the desired circumference of the pultruded product is obtained when reaching the inlet of the pultrusion die, whereby additional pressure wear of the inlet end of the pultrusion die may be avoided.

Obviously this means that according to an advantageous embodiment said pultrusion die has a cross-section being identical to said outlet cross-section of said fibre-passing section.

In an embodiment, said replaceable inlet section is manufactured in at least two parts, thereby facilitating replacement of said inlet section without the need to cut fibre bundles.

Moreover the present disclosure relates to a replaceable inlet section (11) for a pultrusion apparatus,
wherein movement of fibre bundles (8) through said pultrusion apparatus during operation of said pultrusion apparatus defines a production direction,
said pultrusion apparatus comprising an inner fibre-passing section (42) with a tapered shape, wherein, when considering cross-sections of said replaceable inlet section perpendicular to said production direction, the inlet cross-section (43) of said fibre-passing section (42) is larger than the outlet cross-section (44) of said fibre-passing section (42) whereby said fibre-passing section (42) is given a tapered shape tapered towards said pultrusion die (5),
wherein the movement of the fibre bundles (8) through said pultrusion apparatus during operation of said pultrusion apparatus defines a production direction, wherein said replaceable inlet section has a thickness in said production direction between 2 and 100 cm, preferably between 5 and 50 cm, more preferably between 8 and 30 cm.
With a separate replaceable inlet section, a number of advantages are obtained, as can be seen above.

In an embodiment, said replaceable inlet section, as viewed along said production direction, has a width between 5 and 40 cm, preferably between 10 and 30 cm.

In an embodiment, said replaceable inlet section, as viewed along said production direction, has a height between 2 and 20 cm, preferably between 5 and 10 cm.

In an embodiment, said replaceable inlet section (11) comprises at least one fibre guide extending in between fibre bundles (8),
wherein said at least one fibre guide extends at least 2 mm in between said fibre bundles, and
wherein said at least one fibre guide extends between 2 and 50 mm in said production direction.

In order to effectively guide the fibre bundles, a larger extension in between the fibre bundles may be desired. Therefore, according to an embodiment, said at least one fibre guide extends at least 5 mm, preferably at least 10 mm such as at least 20 mm in between said fibre bundles.

Most typically the fibre guides will extend perpendicular to the production direction and moreover perpendicular to the part of the profile circumference, where the fibre guide is fastened. Such design is believed to be the most simple to manufacture. When in the present context it is stated that a fibre guide extends e.g. at least 2 mm in between said fibre bundles, the meaning will be clear for a fibre guide extending perpendicular to production direction and profile circumference as explained above. For a fibre guide which is not perpendicular to production direction and profile circumference, the at least 2 mm may be measured as the component of the fibre guide length, which extends in such direction.

According to an embodiment, a surrounding section of the replaceable inlet section is adapted for fixing said replaceable inlet section to the other parts of said pultrusion apparatus.

According to an embodiment, said replaceable inlet section is manufactured from a polymer, preferably said polymer is selected from the group consisting of polyethylene, polyoxymethylene, polypropylene, polytetrafluoroethylene and polyamide.

Moreover, the present disclosure relates to a guide plate for a pultrusion apparatus comprising a fibre supply (1) for supplying fibre bundles (8) comprising a plurality of fibres, a pulling mechanism (6a, 6b) being arranged for pulling the fibre bundles (8) from the fibre supply (1),
wherein the movement of the fibre bundles (8) through said pultrusion apparatus during operation of said pultrusion apparatus defines a production direction, wherein said guide plate comprises at least one integrated fibre guide (33, 34, 35) capable of extending in between said fibre bundles (8),
wherein said at least one fibre guide (33, 34, 35) is capable of extending at least 2 mm, preferably at least 5 mm, such as at least 10 mm, in between said fibre bundles 8,
wherein said at least one fibre guide (33, 34, 35) is capable of extending between 2 and 50 mm along said production direction, and
wherein said guide plate (10) has a thickness in said production direction between 0.2 and 5 cm, preferably between 0.5 and 3 cm.

According to a preferred embodiment, a convenient way to arrange one or more fibre guides is the use of a guide plate. According to this embodiment, the at least one fibre guide is an integrated part of the guide plate. The guide plate can be easily fastened to the pultrusion apparatus, and one or more guide plates with fibre guides can conveniently be placed in the production path preferably between the resin reservoir and the inlet of the pultrusion die.

Furthermore, the guide plate including fibre guides can easily be made from one piece of polymer, where the extension of the fibre guides along the production direction is the same as the thickness of the guide plate.

According to an embodiment, said guide plate is manufactured from a polymer, preferably said polymer is selected from the group consisting of polyethylene, polyoxymethylene, polypropylene, polytetrafluoroethylene and polyamide.

The guide plate may also be made of metal, such as steel or aluminum.

According to an embodiment, said guide plate, as viewed along said production direction, has a width between 5 and 40 cm, preferably between 10 and 30 cm.

According to an embodiment, said guide plate, as viewed along said production direction, has a height between 2 and 20 cm, preferably between 5 and 10 cm.

According to an embodiment, said guide plate comprises a surrounding section adapted for fixing said guide plate to the other parts of said pultrusion apparatus and an inner fibre-passing section adapted for organizing said fibre bundles in a shape resembling a desired end-product shape of said pultruded product,

According to an embodiment, the circumference of said fibre-passing section is between 101 % and 107 % of the circumference of the pultruded product.

Moreover, the disclosure relates to the use of a guide plate in a pultrusion apparatus to facilitate an even distribution of fibre bundles. Moreover, the invention relates to a method of manufacturing a pultruded product by using a pultrusion apparatus, according to claim 12.

### BRIEF DESCRIPTION OF THE DRAWINGS

In the following section, the invention will be described in a greater detail with reference to embodiments shown by the enclosed figures. It should be emphasised that the embodiments shown are used for example purposes only and should not be used to limit the scope of the invention, defined by claims 1 to 12.

The invention and embodiments thereof will now be further elucidated by means of figures.
Fig. 1 is a schematic representation of a pultrusion apparatus according to an embodiment of the present invention,
Fig. 2A is a top view of an injection box according to an embodiment,
Fig. 2B is a side view of the injection box in fig. 2A,
Fig. 3A is a front view of a guide plate according to an embodiment,
Fig. 3B is a front view of a guide plate according to a more complex embodiment,
Fig. 4 is a perspective view of a replaceable inlet section according to an embodiment, and
Fig. 5 is a schematic representation of two mandrels according to an embodiment.

### DETAILED DESCRIPTION

Profiles obtained with pultrusion are currently used in a wide variety of application areas such as engineering, aerospace, construction and pre-fabricated building and infrastructural accessories such as doors, windows and sky-light frames. The type of fibre material that is used in the pultrusion process, generally, depends on the area of application.

According to embodiments of the disclosure, the fibre materials according to this invention are made from a material selected from the group consisting of aramide, carbon, glass, basalt or natural fibres.

According to a further embodiment, the resin-impregnated group of fibre materials is heated prior to being positioned into the forming mould.

The resin typically used in the pultrusion process is a polyurethane.

According to the invention, an injection box is used as resin reservoir. Furthermore, the process of heating the pultrusion die may be carried out in any conventional manner known in the art. In order to facilitate a high heat transfer in said pultrusion die, it is, generally, made of steel.

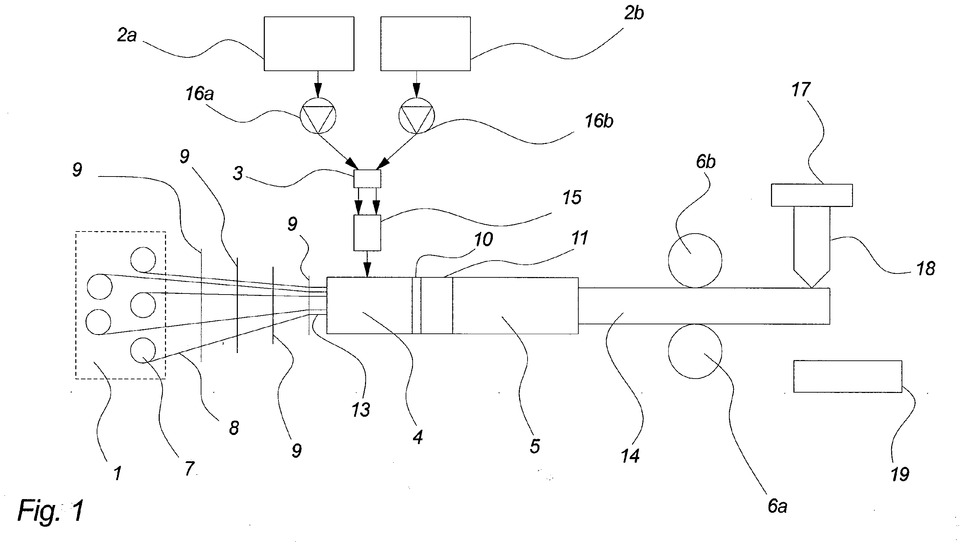

Figure 1 schematically represents a pultrusion apparatus for manufacturing a profile in accordance with an embodiment of the invention. Here the fibre supply 1 is a magazine having a large number of fibre spools 7 (only 5 spools shown in the figure). From each of the fibre spools 7, a fibre material 8 runs off and extends through a number of pre-form plates 9.

Typically the fibre material is provided in a pre-defined form. Further, the pre-defined form in which the fibre material is provided typically depends on special properties/characteristics associated with the desired profile corresponding to an application area. Various examples of the pre-defined form include, but are not limited to, single fibres, tows, rovings and mats.

One or more pre-form plates 9 may be used to guide individual fibre bundles 8 between the fibre spools 7 and the injection box 4. These pre-form plates 9 typically comprise a number of holes corresponding to approximately the number of fibre spools 7 in use or less. With further pre-form plates 9, the holes in these are brought closer together as the fibres are approaching the injection box 4.

In an embodiment of the invention, one pre-form plate 9 may be mounted directly onto the injection box 4. This pre-form plate 9 may comprise at least one hole for guiding a number of fibre bundles or a number of holes for controlling individual fibre bundles.

Hereby the fibres 13 are brought into close proximity to each other and continue into the injection box 4 where they are being impregnated by the resin being supplied from a resin mixing chamber 15. Thereafter the impregnated fibres enter the guide plate 10, further entering the replaceable inlet section 11 before entering the heated pultrusion die 5 for curing the resin.

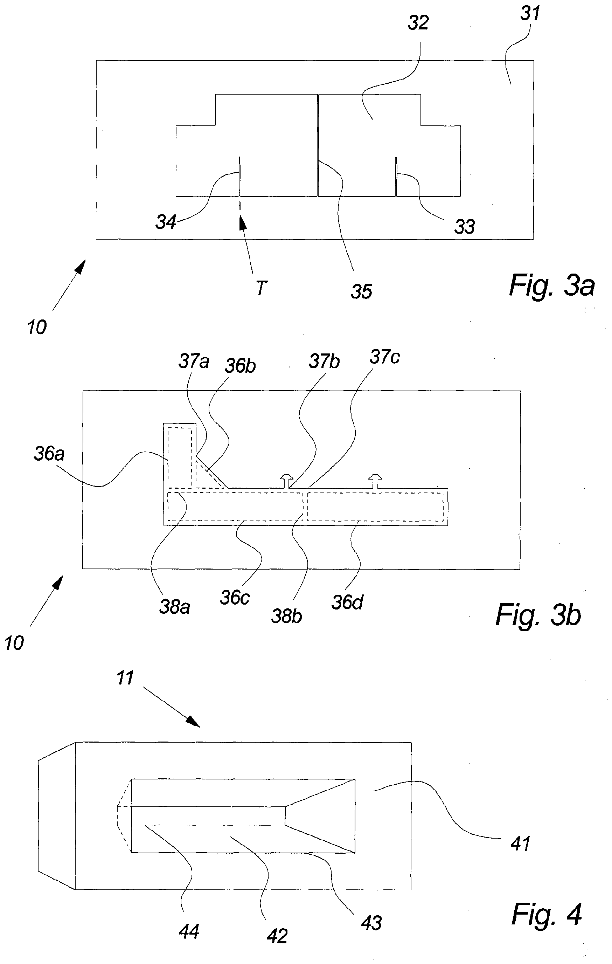

The guide plate 10 will be further explained below with reference to fig. 3, and the replaceable inlet section 11 will be further explained below with reference to fig. 4.

After the curing process, a conventional pulling mechanism e.g. in the form of a roller 6a and a roller 6b is used to grip and pull a cured profile 14 out of the pultrusion die 5. The cured profile 14 is therefore a continuous pultruded profile with a selected shape, defined by the interior shape of the pultrusion die.

Thereafter, the cured profile 14 is advanced to a cutting station 17. At the cutting station 17, the continuously pultruded cured profile 14 is cut with a saw 18 at a predetermined length to obtain the final profile 19.

As mentioned above, the resin is supplied to the injection box 4 through a mixing chamber 15. In the shown preferred embodiment the resin is a polyurethane comprising at least two reactive resin components, e.g. polyols and isocyanates, being stored in separate containers 2a, 2b from which they are pumped by means of separate pumps 16a, 16b through optional separate heaters 3, and thereafter the two resin components are mixed in the mixing chamber 15 and introduced into the injection box 4.

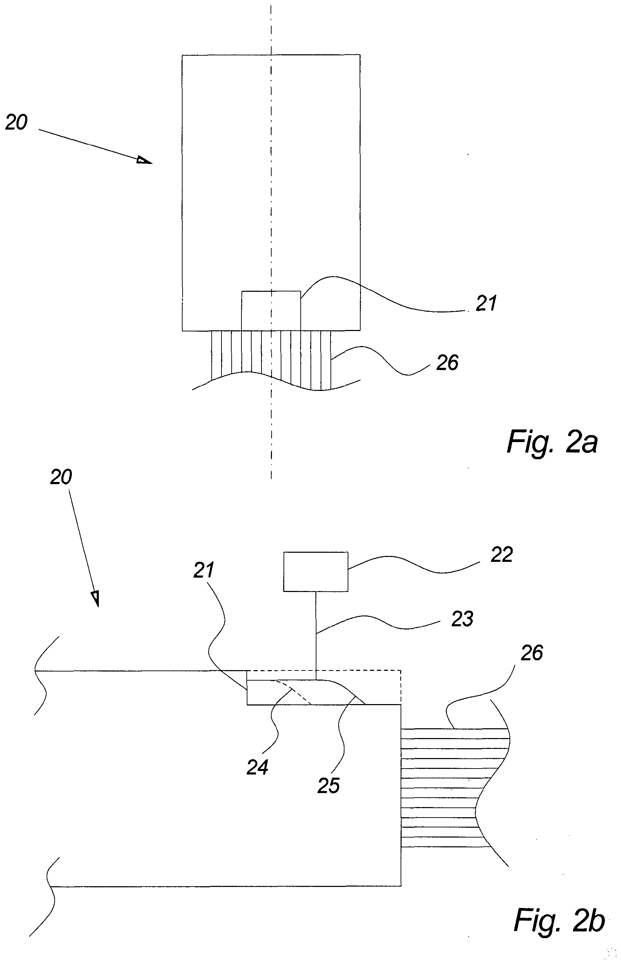

Fig. 2A is a top view of an injection box 20 according to an embodiment, where Fig. 2B is a side view of the same.

In this embodiment, a carving 21 is shown in the top of the injection box at the inlet end for the fibre material 26. The resin in the resin box is visible from the outside of the injection box through the carving. Depending on the amount of resin in the injection box, the build up of resin in the carving will vary. The resin residing in the carving at any time may be described as a buffer amount of excess resin as compared to the amount of resin necessary to adequately fill the injection box and thereby wet the fibres.

A light source 22 is arranged to point a beam of light 23 towards the buffer amount of resin in the carving, collecting data for a controller (not shown). When the buffer amount is larger, the resin level in the carving will reach position 25. By means of said beam of light 23, the controller regulates the pumps, 16a and 16b on fig.1, for resin supply to supply less resin to the injection box 20 to prevent any spills and overflow. Accordingly, the buffer amount will diminish and when reaching position 24, by means of said beam of light 23, the controller will measure that the buffer amount is low and the controller will then regulate the pumps for resin supply to supply more resin to the injection box to prevent shortage of resin with respect to adequate wetting of the fibre material 26.

Fig. 3A is a front view along the production direction of a guide plate 10 according to an embodiment. The guide plate 10 comprises a surrounding section 31 and an inner fibre-passing section 32 that has a shape approximating the shape of the pultruded product. In the shown embodiment, three fibre guides 33, 34, 35 are used of which the two 33, 34 extend partly through the fibre-passing section 32, whereas the last one 35 extends fully across the fibre-passing section 32. Obviously the number of both partly and fully extending fibre guides may be adjusted according to a specific purpose.

The thickness of fibre guide 34 is indicated with a T.

The fibre guides are arranged in such a way as to help preventing the individual fibres or fibre bundles to depart from being substantially aligned with respect to the production direction. Thereby good wetting of the fibre material is promoted and the build up of lumps of fibre material or fibre material protruding from the surface of the pultruded product is diminished, ensuring long continuous production runs.

Fig. 3B is a front view of a guide plate according to a more complex embodiment. Even though not part of the guide plate, mandrels 36a, 36b, 36c, 36d are shown with dashed lines to indicate possible positions through the guide plate when the pultrusion apparatus is running. With a number of mandrels, as illustrated, cavities may be established within the pultruded product. With a more complex pultruded product as illustrated in fig. 3B, some areas of the guide plate may preferably comprise a fibre guide. Examples of such areas are illustrated with 37a, 37b, 37c. Furthermore, some of the mandrels may preferably be connected with a connecting element, e.g. around the areas illustrated with 38a, 38b.

Fig. 4 is a perspective view of a replaceable inlet section 11 according to an embodiment. The replaceable inlet section 11 comprises a surrounding section 41 and an inner fibre-passing section 42. The replaceable inlet section 11 is intended for using with the fibres passing in through an inlet side having an inlet cross-section 43 and out through an outlet side having an outlet cross-section 44. The outlet cross-section will correspond at least substantially to the desired geometric shape of the profile.

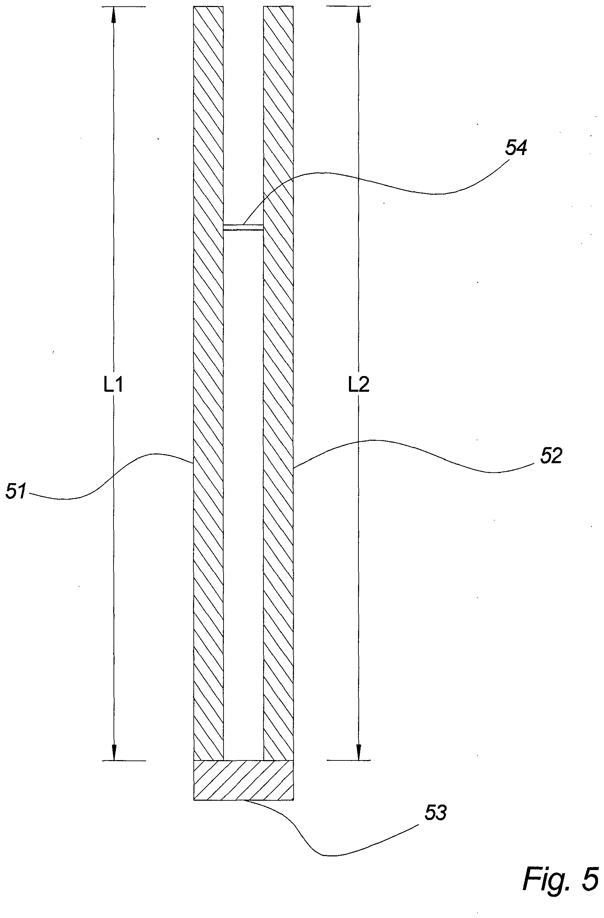

Fig. 5 is a schematic representation of two mandrels 51, 52 with lengths L1 and L2 according to an embodiment of the present invention. In order to minimize movement of these mandrels relative to each other, a transversal connecting element 54 has been introduced. When used with the present invention, the mandrels 51, 52 are fixed to a support bracket 53 at a point outside the inlet end of the pultrusion die. Preferably such point will be outside the inlet end of the injection box with the mandrels cantilevered forward through the full length of the pultrusion die.

The method described above has a number of advantages as described above in the summary section. It should be noted that the disclosed embodiments are non-limiting examples, and as such the scope of the present invention is only limited by the subsequently following claims.

## Claims

1. A pultrusion apparatus for manufacturing a pultruded product (19), said pultrusion apparatus comprising a fibre supply (1) for supplying fibre bundles (8) comprising a plurality of fibres, a resin supply (2a, 2b) for supplying resin, an injection box as a resin reservoir (4, 20), a pultrusion die (5) comprising heating means, a pulling mechanism (6a, 6b) being arranged for pulling the fibre bundles (8) from the fibre supply (1) and through the injection box (4, 20) and the pultrusion die (5), and where the fibre bundles (8), during operation of said pultrusion apparatus, are being impregnated by the resin in the injection box (4, 20) and thereafter are being pulled through the pultrusion die (5) for curing the resin,
wherein the resin is polyurethane,
wherein the movement of the fibre bundles (8) through said pultrusion apparatus during operation of said pultrusion apparatus defines a production direction,
said pultrusion apparatus further comprises at least one fibre guide (33, 34, 35) extending in between said fibre bundles (8) at a position along said production direction where, during operation, resin has been added to said fibre bundles (8) but where said resin has not yet been fully cured into said pultruded product (19), wherein said at least one fibre guide (33, 34, 35) extends at least 2 mm in between
said fibre bundles (8), wherein the extension in between the fibre bundles corresponds to the projection of the fiber guide into a cross-section perpendicular to the production direction,
wherein said at least one fibre guide (33, 34, 35) extends between 2 and 50 mm along said production direction, and wherein a cross-section of said at least one fibre guide perpendicular to said production direction has an area of less than 2 cm², preferably less than 1 cm².

2. A pultrusion apparatus according to claim 1, wherein said at least one fibre guide (33, 34, 35), in a cross-section perpendicular to said production direction, has a thickness between 0.2 and 10 mm, such as between 0.2 and 5 mm, preferably between 0.5 and 4 mm.

3. A pultrusion apparatus according to any of the claims 1-2 , wherein said at least one fibre guide (33, 34, 35) is an integrated part of a separate guide plate (10) arranged between said injection box (4) and said pultrusion die (5).

4. A pultrusion apparatus according to any of the claims wherein said pultrusion apparatus comprises at least two mandrels (51, 52) with lengths L1 and L2 fixed to a support means (53), e.g. a support bracket (53), at a point outside the inlet end of said pultrusion die (5),
said at least two mandrels (51, 52) extend into the interior of said pultrusion die (5) in said production direction.

5. A pultrusion apparatus according to claim 4 wherein said at least one fibre guide (33, 34, 35) is configured to restrict the movement of at least one of said at least two mandrels (51, 52).

6. A pultrusion apparatus according to any of the claims 4-5, wherein at least two, such as at least three, fibre guides (33, 34, 35) are configured to restrict the movement of at least one of said at least two mandrels (51, 52).

7. A pultrusion apparatus according to any of the claims 4-5, wherein said at least one fibre guide (33, 34, 35) is a connecting element (54) between said at least two mandrels (51, 52).

8. A pultrusion apparatus according to any of the claims 4-5,7 wherein said at least one fibre guide (33, 34, 35) is fastened to each of said at least two mandrels (51, 52) at a position of between 5 and 95% of L1 and L2, respectively, from said support means (53).

9. A pultrusion apparatus according to any of the claims 4-8, wherein said support means (53) is positioned at a point outside the inlet end of said injection box (4, 20).

10. A pultrusion apparatus according to any of the claims 4-9, wherein said support means (53) is an integral part of said inlet end of said injection box.

11. A pultrusion apparatus according to any of the claims 4-10, wherein said pultrusion apparatus comprises heating means for heating said at least two mandrels.

12. Method of manufacturing a pultruded product (19) by using a pultrusion apparatus according to any of the claims 1-11.

## Patentansprüche

1. Strangziehvorrichtung zum Herstellen eines stranggezogenen Produkts (19), wobei die Strangziehvorrichtung Folgendes umfasst: einen Faservorrat (1) für die Zuführung von Faserbündeln (8), die mehrere Fasern enthalten, einen Harzvorrat (2a, 2b) für die Zuführung von Harz, eine Einspeisebox als Harzreservoir (4, 20), eine Strangziehmatrize (5), die ein Heizmittel umfasst, eine Zieheinrichtung (6a, 6b), die dafür eingerichtet ist, die Faserbündel (8) aus dem Faservorrat (1) und durch die Einspeisebox (4, 20) und die Strangziehmatrize (5) zu ziehen, und wobei die Faserbündel (8), während des Betriebs der Strangziehvorrichtung, durch das Harz in der Einspeisebox (4, 20) getränkt werden und anschließend durch die Strangziehmatrize (5) gezogen werden, um das Harz zu härten,
wobei das Harz ein Polyurethan ist,
wobei die Bewegung der Faserbündel (8) durch die Strangziehvorrichtung während des Betriebs der Strangziehvorrichtung eine Produktionsrichtung definiert,
wobei die Strangziehvorrichtung außerdem wenigstens eine Faserführung (33, 34, 35) umfasst, die sich zwischen den Faserbündeln (8) erstreckt, an einer Position entlang der Produktionsrichtung, an der, während des Betriebs, Harz zu den Faserbündeln (8) hinzugefügt wurde, an der das Harz jedoch noch nicht vollständig zu dem stranggezogenen Produkt (19) ausgehärtet ist,
wobei die wenigstens eine Faserführung (33, 34, 35) sich wenigstens 2 mm zwischen den Faserbündeln (8) erstreckt und wobei die Erstreckung zwischen den Faserbündeln einer Projektion der Faserführung auf einen Querschnitt senkrecht zur Produktionsrichtung entspricht,
wobei die wenigstens eine Faserführung (33, 34, 35) sich zwischen 2 und 50 mm entlang der Produktionsrichtung erstreckt und wobei ein Querschnitt der wenigstens einen Faserführung senkrecht zur Produktionsrichtung eine Fläche von weniger als 2 cm² hat und vorzugsweise weniger als 1 cm².

2. Strangziehvorrichtung nach Anspruch 1, wobei die wenigstens eine Faserführung (33, 34, 35), in einem Querschnitt senkrecht zur Produktionsrichtung, eine Dicke zwischen 0,2 und 10 mm hat, wie etwa zwischen 0,2 und 5 mm und vorzugsweise zwischen 0,5 und 4 mm.

3. Strangziehvorrichtung nach einem der Ansprüche 1 bis 2, wobei die wenigstens eine Faserführung (33, 34, 35) ein integrierter Teil einer getrennten Führungsplatte (10) ist, die zwischen der Einspeisebox (4) und der Strangziehmatrize (5) angeordnet ist.

4. Strangziehvorrichtung nach einem der Ansprüche 1 bis 3, wobei die Strangziehvorrichtung wenigstens zwei Dorne (51, 52) mit den Längen L1 und L2 umfasst, die an einem Trägermittel (53) befestigt sind, beispielsweise einer Trägerplatte (53), an einem Punkt außerhalb des Einlassendes der Strangziehmatrize (5),
wobei die wenigstens zwei Dorne (51, 52) sich in der Produktionsrichtung in das Innere der Strangziehmatrize (5) hinein erstrecken.

5. Strangziehvorrichtung nach Anspruch 4, wobei die wenigstens eine Faserführung (33, 34, 35) dafür eingerichtet ist, die Bewegung wenigstens eines der wenigstens zwei Dorne (51, 52) einzuschränken.

6. Strangziehvorrichtung nach einem der Ansprüche 4 bis 5, wobei wenigstens zwei, wie etwa wenigstens drei, Faserführungen (33, 34, 35) dafür eingerichtet sind, die Bewegung wenigstens eines der wenigstens zwei Dorne (51, 52) einzuschränken.

7. Strangziehvorrichtung nach einem der Ansprüche 4 bis 5, wobei die wenigstens eine Faserführung (33, 34, 35) ein verbindendes Element (54) zwischen den wenigstens zwei Dornen (51, 52) ist.

8. Strangziehvorrichtung nach einem der Ansprüche 4 bis 5, 7, wobei die wenigstens eine Faserführung (33, 34, 35) an jedem der wenigstens zwei Dorne (51, 52) befestigt ist, an einer Position zwischen 5 und 95% der Längen L1 bzw. L2, ausgehend vom Trägermittel (53).

9. Strangziehvorrichtung nach einem der Ansprüche 4 bis 8, wobei das Trägermittel (53) an einem Punkt außerhalb des Einlassendes der Einspeisebox (4, 20) positioniert ist.

10. Strangziehvorrichtung nach einem der Ansprüche 4 bis 9, wobei das Trägermittel (53) ein integraler Teil des Einlassendes der Einspeisebox ist.

11. Strangziehvorrichtung nach einem der Ansprüche 4 bis 10, wobei die Strangziehvorrichtung ein Heizmittel zum Beheizen der wenigstens zwei Dorne umfasst.

12. Verfahren zum Herstellen eines stranggezogenen Produkts (19) unter Verwendung einer Strangziehvorrichtung nach einem der Ansprüche 1 bis 11.

## Revendications

1. Appareil d'extrusion par étirage permettant de fabriquer un produit extrudé par étirage (19), ledit appareil d'extrusion par étirage comprenant une réserve de fibres (1) pour fournir des faisceaux de fibres (8) comprenant une pluralité de fibres, une réserve de résine (2a, 2b) pour fournir de la résine, une boîte d'injection sous forme de réservoir à résine (4, 20), une filière d'extrusion par étirage (5) comprenant un moyen de chauffage, un mécanisme de traction (6a, 6b) étant agencé de manière à tirer les faisceaux de fibres (8) depuis la réserve de fibres (1) et à travers la boîte d'injection (4, 20) et la filière d'extrusion par étirage (5), et où les faisceaux de fibres (8), pendant le fonctionnement dudit appareil d'extrusion par étirage, sont imprégnés par la résine de la boîte d'injection (4, 20) et sont ensuite tirés à travers la filière d'extrusion par étirage (5) pour durcir la résine,
dans lequel la résine est un polyuréthane,
dans lequel le déplacement des faisceaux de fibres (8) à travers ledit appareil d'extrusion par étirage pendant le fonctionnement dudit appareil d'extrusion par étirage définit une direction de production,
ledit appareil d'extrusion par étirage comprenant en outre au moins un guide-fibres (33, 34, 35) s'étendant entre lesdits faisceaux de fibres (8) à un endroit le long de ladite direction de production où, pendant le fonctionnement, une résine a été ajoutée auxdits faisceaux de fibres (8) mais où ladite résine n'a pas encore été complètement durcie pour former ledit produit extrudé par étirage (19),
dans lequel ledit au moins un guide-fibres (33, 34, 35) s'étend sur au moins 2 mm entre lesdits faisceaux de fibres (8), dans lequel l'extension entre les faisceaux de fibres correspond à la projection du guide-fibres dans une section transversale perpendiculaire à la direction de production,
dans lequel ledit au moins un guide-fibres (33, 34, 35) s'étend entre 2 et 50 mm le long de ladite direction de production, et dans lequel une section transversale dudit au moins un guide-fibres perpendiculaire à ladite direction de production a une superficie inférieure à 2 cm², de préférence inférieure à 1 cm².

2. Appareil d'extrusion par étirage selon la revendication 1, dans lequel ledit au moins un guide-fibres (33, 34, 35), dans une section transversale perpendiculaire à ladite direction de production, a une épaisseur comprise entre 0,2 et 10 mm, telle qu'entre 0,2 et 5 mm, de préférence entre 0,5 et 4 mm.

3. Appareil d'extrusion par étirage selon l'une quelconque des revendications 1 et 2, dans lequel ledit au moins un guide-fibres (33, 34, 35) fait partie intégrante d'une plaque de guidage séparée (10) agencée entre ladite boîte d'injection (4) et ladite filière d'extrusion par étirage (5).

4. Appareil d'extrusion par étirage selon l'une quelconque des revendications 1 à 3, dans lequel ledit appareil d'extrusion par étirage comprend au moins deux mandrins (51, 52) de longueurs L1 et L2 fixés sur un moyen de support (53), par exemple une équerre de support (53), à un endroit situé à l'extérieur de l'extrémité d'entrée de ladite filière d'extrusion par étirage (5),
lesdits au moins deux mandrins (51, 52) s'étendent jusqu'à l'intérieur de ladite filière d'extrusion par étirage (5) dans ladite direction de production.

5. Appareil d'extrusion par étirage selon la revendication 4, dans lequel ledit au moins un guide-fibres (33, 34, 35) est configuré pour limiter le déplacement d'au moins un desdits au moins deux mandrins (51, 52).

6. Appareil d'extrusion par étirage selon l'une quelconque des revendications 4 et 5, dans lequel au moins deux, tel qu'au moins trois, guide-fibres (33, 34, 35) sont configurés pour limiter le déplacement d'au moins un desdits au moins deux mandrins (51, 52).

7. Appareil d'extrusion par étirage selon l'une quelconque des revendications 4 et 5, dans lequel ledit au moins un guide-fibres (33, 34, 35) est un élément de liaison (54) entre lesdits au moins deux mandrins (51, 52).

8. Appareil d'extrusion par étirage selon l'une quelconque des revendications 4, 5 et 7, dans lequel ledit au moins un guide-fibres (33, 34, 35) est fixé à chacun desdits au moins deux mandrins (51, 52) à un emplacement situé à une distance comprise entre 5 et 95 % de L1 et L2, respectivement, dudit moyen de support (53).

9. Appareil d'extrusion par étirage selon l'une quelconque des revendications 4 à 8, dans lequel ledit moyen de support (53) est placé à un endroit situé à l'extérieur de l'extrémité d'entrée de ladite boîte d'injection (4, 20).

10. Appareil d'extrusion par étirage selon l'une quelconque des revendications 4 à 9, dans lequel ledit moyen de support (53) fait partie intégrante de ladite extrémité d'entrée de ladite boîte d'injection.

11. Appareil d'extrusion par étirage selon l'une quelconque des revendications 4 à 10, dans lequel ledit appareil d'extrusion par étirage comprend un moyen de chauffage pour chauffer lesdits au moins deux mandrins.

12. Procédé de fabrication d'un produit extrudé par étirage (19) au moyen d'un appareil d'extrusion par étirage selon l'une quelconque des revendications 1 à 11.
